## Europäisches Patentamt

## European Patent Office

## Office européen des brevets

(19)

(11) Veröffentlichungsnummer: **0 129 215**

**B1**

(12) # EUROPÄISCHE PATENTSCHRIFT

(45) Veröffentlichungstag der Patentschrift:
**04.11.87**

(51) Int. Cl.⁴: **F 16 G 13/06,** F 16 H 55/30

(21) Anmeldenummer: **84106807.5**

(22) Anmeldetag: **14.06.84**

(54) **Kette.**

(30) Priorität: **14.06.83 DE 3321491**

(43) Veröffentlichungstag der Anmeldung:
**27.12.84 Patentblatt 84/52**

(45) Bekanntmachung des Hinweises auf die Patenterteilung:
**04.11.87 Patentblatt 87/45**

(84) Benannte Vertragsstaaten:
**DE FR GB IT**

(56) Entgegenhaltungen:
**FR-A-1 311 314**
**GB-A-646 806**
**US-A-1 877 339**
**US-A-2 498 788**
**US-A-3 448 629**
**US-A-4 043 214**
**US-A-4 117 738**

(73) Patentinhaber: **Joh. Winklhofer & Söhne, Albert-Rosshaupter- Strasse 53, D-8000 München 70 (DE)**

(72) Erfinder: **Klimiont, Manfred, Max- Reger- Weg 8, D-8192 Geretsried (DE)**

(74) Vertreter: **Weickmann, Heinrich, Dipl.- Ing., Patentanwälte Dipl.- Ing. H.Weickmann Dipl.- Phys.Dr. K.Fincke Dipl.- Ing. F.A.Weickmann Dipl.- Chem. B. Huber Dr.- Ing. H. Liska Dipl.- Phys.Dr. J. Prechtel Postfach 860820, D-8000 München 86 (DE)**

LIBER, STOCKHOLM 1987

## Beschreibung

Die Erfindung betrifft eine Kette nach dem Oberbegriff des Patentanspruchs 1.

Bei einer nach der GB-A-646 806 bekannten Kette sind die Enden der Hülsen zur Befestigung an den Innenlaschen aufgeweitet.

Eine nach der US-A-1 877 339 bekannte Kette weist in ihrem Mittelbereich unterteilte Hülsen auf, die mittleren Laschen Platz machen. Die mittleren Laschen sind an den Nieten angelenkt.

Nach der US-A-2 498 788 ist eine Kette bekannt, die nur Außenlaschen und mittlere Laschen aufweist. Die mittleren Laschen sitzen fest auf je zwei benachbarten Hülsen.

Werden bei diesen Ketten die Innenlaschen auf die Hülsen aufgepreßt, so schnüren sich dadurch die Hülsen etwas ein, wodurch die Hülsen etwas tonnenförmig werden. Die Hauptlast tragen daher während des Einlaufens der Kette die Hülsenenden, bis infolge eintretenden Verschleißes die Hülsen über ihre ganze Länge gleichmäßig beansprucht werden. Diesen Effekt kann man vermeiden, wenn man den Hülseninnendurchmesser am Aufpreßbereich der Innenlaschen vergrößert. Die Durchmesservergrößerung muß dann so gewählt werden, daß die Hülse nach dem Aufpressen der Innenlaschen möglichst genau zylindrisch ist. Eine solche Durchmesservergrößerung ist aber aufwendig und nicht stets genau reproduzierbar.

Nach der FR-A-1 311 314 ist eine Kette nach dem Oberbegriff des Anspruchs 1 bekannt, bei der auf die Hülsen zwischen zwei Rollen aus nachgiebigem Material ein Ring aus nicht nachgiebigem Material aufgebracht ist, dessen Außendurchmesser kleiner ist als derjenige der Rollen. Dieser Ring dient als Puffer, wenn durch die Zähne eines Kettenzahnrades die Rollen zusammengedrückt werden.

Aufgabe der Erfindung ist es, dafür zu sorgen, daß die Hülsen auch im montierten Zustand möglichst exakt zylindrisch sind und bleiben.

Die Lösung dieser Aufgabe ist im Kennzeichen des Anspruchs 1 angegeben.

Die Umfassungsteile nach der Erfindung sorgen dafür, daß, da die Hülsen auch nach dem Aufpressen der Innenlaschen im wesentlichen zylindrisch sind, ein Verschleiß der Hülsen durch die Zähne des Kettenrades und damit die nachträgliche Längung der Kette im Betrieb gering gehalten wird.

Um die Stabilität der Kette zu erhöhen, ist bevorzugt eine Ausbildung gemäß Anspruch 2 vorgesehen. Zu jeweils einem Paar von Innenlaschen tritt dann mindestens noch eine zusätzliche zwischen den Innenlaschen liegende mittlere Lasche. Allerdings müssen dann Mehrfachkettenräder eingesetzt werden, bei denen die Breite jedes Einzelrades ungefähr der Breite des Zwischenraums zwischen den Innenlaschen und der mittleren Lasche entspricht. Die Einzelzahnräder können verhältnismäßig breit sein, wenn gemäß Anspruch 3 vorgegangen wird.

In jedem Fall steht es frei, die Rollen vorzusehen oder nicht.

Die zusätzlichen mittleren Laschen bilden - was ein weiterer Vorteil ist - ein zusätzliches Hindernis gegen ein seitliches Auswandernder Innenlaschen von den Hülsen, auf die sie aufgepreßt sind, weil die zusätzlichen mittleren Laschen als zusätzliche Seitenführungen dienen.

Die Erfindung wird im folgenden an Ausführungsbeispielen unter Hinweis auf die beigefügten Zeichnungen erläutert:

Fig. 1 zeigt eine erste Ausführungsform einer Kette in Aufsicht, teilweise im Schnitt.

Fig. 2 zeigt das Zusammenwirken der Kette nach Fig. 1 mit dem Doppel-Kettenrad.

Fig. 3 zeigt eine zweite Ausführungsform der Kette.

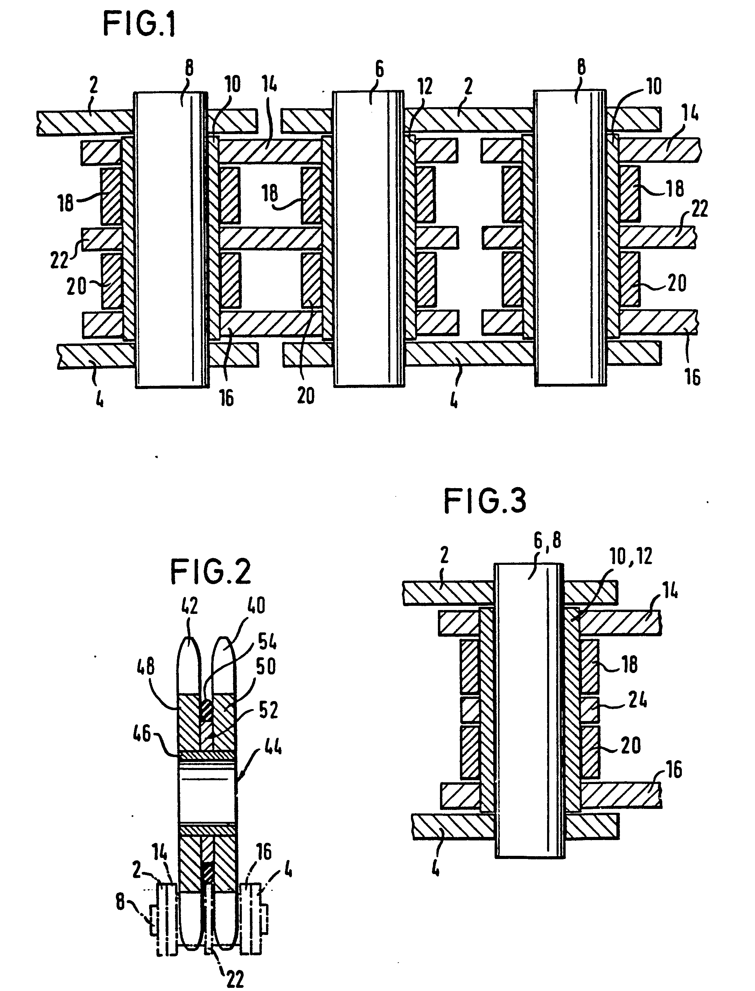

Die Kette nach Fig. 1 und 2 weist Paare von Außenlaschen 2, 4 auf, die an ihren beiden Enden durch Niete 6, 8 miteinander verbunden sind. Die Niete 6, 8 sind von Hülsen 10, 12 umfaßt, die an ihren beiden Enden miteinander durch Innenlaschen 14, 16 verbunden sind. Dabei sind die Innenlaschen 14, 16 auf die Hülsen 10, 12 aufgepreßt. Die Hülsen 10, 12 sind ihrerseits von Rollen 18, 20 umfaßt.

Bei der Ausführungsform nach Fig. 1 und 2 sind auf die Hülsen 10, 12, die durch Laschen 14, 16 miteinander verbunden sind, mittig Laschen 22 aufgepreßt; den axialen Raum zwischen den Laschen 22 und den Innenlaschen 14, 16 füllen mit Spiel die Rollen 18, 20 aus. Diese Rollen 18, 20 wirken mit Zähnen 40, 42 eines Doppelkettenrads 44 zusammen, das zwei auf einer gemeinsamen Nabe 46 sitzende gestanzte und von einem Abstandsstück 52 in Abstand gehaltene Einzelkettenräder 48, 50 aufweist. Das Abstandsstück 52 ist von einem Ring 54 aus elastischem Material, insbesondere Gummi, umfaßt, auf den die mittleren Laschen 22 auflaufen.

Bei der Ausführungsform nach Fig. 3 sitzen auf den einzelnen Hülsen 10 bzw. 12 statt der Laschen 22 nach Fig. 1 und 2 nur Ringe 24. Jeweils zwei solcher Ringe 24 kann man sich durch eine Lasche 22 nach Fig. 1 und 2 zusammengefaßt denken. Ersichtlich ist der Außendurchmesser der Ringe 24 bei der Ausführungsform nach Fig. 3 gleich oder kleiner dem Außendurchmesser der Rollen 18, 20, so daß ein ziemlich breites Kettenrad verwendet werden kann, das zwischen den Laschen 14, 16 Platz hat.

## Patentansprüche

1. Kette mit Außenlaschen (2, 4), die an ihren beiden Enden durch Niete (6, 8) miteinander verbunden sind, und mit Innenlaschen (14, 16), die an ihren beiden Enden durch die Niete (6, 8) umfassende Hülsen (10, 12) miteinander verbunden sind, bei der die Innenlaschen (14, 16) auf die Enden der im Ausgangszustand zylindrischen Hülsen (10, 12) aufgepreßt sind und bei der die Hülsen (10, 12) zwischen den Innenlaschen (14, 16) von jeweils wenigstens einem Umfassungsteil (22, 24) umschlossen sind, dadurch gekennzeichnet, daß die Umfassungsteile (22, 24) derart auf die Hülsen (10, 12) aufgepreßt sind, daß die Hülsen (10, 12) nach dem Aufpressen der Innenlaschen (14, 16) im wesentlichen zylindrisch sind.

2. Kette nach Anspruch 1, dadurch gekennzeichnet, daß je zwei Umfassungsteile (24), die in gleicher Axiallage auf benachbarten, durch Innenlaschen (14, 16) miteinander verbundenen Hülsen (10, 12) aufgepreßt sind, zu einer den Innenlaschen (14, 16) entsprechenden, den Innenlaschen (14, 16) parallelen mittleren Lasche (22) zusammengefaßt sind.

3. Kette nach einem der vorhergehenden Ansprüche, dadurch gekennzeichnet, daß die Umfassungsteile (22, 24) schmaler sind als die Innenlaschen (14, 16).

## Claims

1. Chain with outer side-bars (2, 4) which are connected with one another at both ends by rivets (6, 8), and with inner side-bars (14, 16) which are connected with one another at both ends by sleeves (10, 12) surrounding the rivets, in which the inner side-bars (14, 16) are pressed on to the ends of the sleeves (10, 12), which are cylindrical in the initial condition, and in which the sleeves (10, 12) are surrounded between the inner side-bars (14, 16) each by at least one surrounding part (22, 24), characterised in that the surrounding parts (22, 24) are pressed on to the sleeves (10, 12) in such a way that the sleeves (10, 12) are substantially cylindrical after the pressing-on of the inner side-bars (14, 16).

2. Chain according to Claim 1, characterised in that in each case two surrounding parts (24), which are pressed in equal axial position on to adjacent sleeves (10, 12) connected with one another by inner side-bars (14, 16), are joined together into a middle side-bar (22) parallel and corresponding to the inner side-bars (14, 16).

3. Chain according to one of the preceding Claims, characterised in that the surrounding parts (22, 24) are narrower than the inner side bars (14, 16).

## Revendications

1. Chaîne comportant des maillons extérieurs (2, 4) qui sont liés l'un à l'autre à leurs deux extrémités par des rivets (6, 8), et des maillons intérieurs (14, 16) qui sont liés l'un à l'autre à leurs deux extrémités par des douilles (10, 12) entourant les rivets (6, 8), dans laquelle les maillons intérieurs (14, 16) sont engagés à force sur les douilles (10, 12) cylindriques à' l'état initial et dans laquelle les douilles (10, 12) sont entourées chacune, entre les maillons intérieurs (14, 16), par au moins une pièce de cerclage (22, 24), caractérisée en que les pièces de cerclage (22, 24) sont engagées à force sur les douilles (10, 12), de telle sorte que les douilles (10, 12) sont sensiblement cylindriques après l'engagement à force des maillons intérieurs (14, 16).

2. Chaîne selon la revendication 1, caractérisée en ce que deux pièces de cerclage (24), qui sont engagées à force, en même position axiale, sur des douilles (10, 12) voisines et reliées l'une à l'autre par des maillons intérieurs (14, 16), sont réunies en un maillon médian (22) en correspondance avec les maillons intérieurs (14, 16) et parallèle à ces maillons intérieurs (14, 16).

3. Chaîne selon l'une des revendications précédentes, caractérisée en ce que les pièces de cerclage (22, 24) sont plus étroites que les maillons intérieurs (14, 16).

# FIG.1

# FIG.3

# FIG.2